# EUROPEAN PATENT APPLICATION

(11) **EP 1 722 324 A1**
(43) Date of publication of application: **15.11.2006**
(21) Application number: 05388043.1
(22) Date of filing: 13.05.2005
(51) Int. Cl.: G06Q 30/00

(54) **Method and system for electronically distributing sales information to a selected group of individuals**

(71) Applicant: Bipbip Holding ApS, 2800 Kgs. Lyngby (DK)
(72) Inventor: Larsen, Lasse L.K., DK-2100 Kobenhavn O (DK)
(74) Representative: Nielsen, Henrik Sten

(57) **Abstract**

The present invention relates to a method for electronically distributing sales information to a selected group of individuals. Each of the individuals have a communication device including a display element. The communication device is connected to a communication network and the selected group of individuals are selected from a first database comprising a plurality of records, each representing a specific individual and including identification information, interest information, location information and maximum travel distance. The method may comprise the steps of providing geographical location information of a specific store and calculating distance between the specific store and each of the individuals in the group, selecting the selected group of individuals from the group provided the distance between the specific store and the individual is lower than the desired maximum distance and based on the interest information, and transmitting the sales information via the communication network to the communication devices of the individuals in the selected group to be displayed by the display element.

## Description

The present invention relates to a method for conducting marketing campaigns by distributing marketing information to a selected group of individuals, a system for conducting marketing campaigns by electronic distribution of marketing information to a specific group of individuals and a record carrier comprising a computer implementation of the method according to the present invention.

Related methods and apparatuses are described in publications such as WO 2004/008354, US 2005/4840, US 2003/9393, US 2004/128197, US 2002/87404, WO 03/101123 and WO 02/23444. Reference is made to all of the above mentioned publications and all are hereby incorporated in the present description by reference in their entirety.

Traditionally, any company or store wanting to promote the sale of a product uses mass media such as radio ads, TV-ads, ads on web pages, printed media ads or a combination thereof. The company or store then has to rely on the ad being noticed by consumers and the consumers then remembering the ad and acting on it, e.g. by going to the store. As placing an ad in a mass-media such as a local newspaper may be expensive and the outcome or response to the ad may be questionable, a need exists to provide a method for conducting marketing campaigns to selected group of individuals having a higher probability to act on the marketing campaign, i.e. visit the store and buy a product.

The present invention provides in a first aspect a method for electronically distributing sales information to a selected group of individuals, each of the individuals having a communication device including a display element, the communication device connected to a communication network, the selected group of individuals selected from a first database comprising a plurality of records each representing a specific individual and including identification information, interest information, location information and maximum travel distance, the method comprising the steps of: providing geographical location information of a specific store and calculating distance between the specific store and each of the individuals in the group, selecting the selected group of individuals from the group provided the distance between the specific store and the individual is lower than the desired maximum distance and based on the interest information, and transmitting the sales information via the communication network to the communication devices of the individuals in the selected group to be displayed by the display element.

The sales information may be sent out by e.g. a storeowner or a person acting on behalf of a storeowner, e.g. a manager. In the present context, the term store is meant to cover any store, chain of stores, warehouse, corporation or the like. These stores may sell any products, such as foodstuffs, clothes, consumer electronics, gardening equipment, services, travels or holidays, any goods or combinations hereof.

In the presently preferred embodiment of the present invention, the first database comprises data that people have entered on their own, e.g. via an interface on a webpage or via SMS. In alternative embodiments, the data may come from third party data bases where the data have been collected by others or entered by the person him or her self.

The data record comprises at least identification information, such as mobile device identification, i.e. phone number, interest information, such as clothing, foodstuffs, jewellery etc, location information, i.e. at which location or area does the person, to which the data record relates, resides or sojourns and maximum travel distance to a store, i.e. which maximum distance does the person wishes to travel to a store to buy certain goods. This enables a definition of a target group of people more likely to react to a marketing campaign for a given product.

As the store owner has defined the physical location of the store at which products of a certain type and price are promoted via the sales information distributed to the selected group of individuals may be purchased, a distance between the store and the location of the persons may be calculated and the selection or definition of the target group may be based partly on the distance between the store and the individuals. The store owner may defined a distance to which he or she wishes to limit the target group and the persons or individuals may define which distance they wish to travel for a specific good. This greatly improves the effect of the sales information or marketing of a product as the probability of people acting on the sales information distributed by the store owner.

Additionally, the method further comprises providing information regarding discount obtained in the sales information, further selecting the selected group of individuals based on comparing the discount information with the minimum discount.

The store owner may additionally specify a discount rate such as a before and now price or a percentage discount obtainable to a user or individual of the target group. The individuals represented by the data records in the first database may also specify a level of discount that they wish to obtain before they receive sales information. This further increases the possibility or likelihood that a person a individual acts on the sales information and visits the store and buys the product.

In a second aspect, the present invention relates to a method for electronically distributing sales information to a selected group of individuals, each of the individuals having a communication device including a display element, the communication device connected to a communication network, the selected group of individuals selected from a first database comprising a plurality of records each representing a specific individual and including identification information, interest information, location information and minimum discount, the method comprising the steps of providing discount information, selecting the selected group of individuals based on comparing the discount information with the desired minimum discount and based on the interest information, and transmitting the sales information via the communication network to the communication devices of the individuals in the selected group to be displayed by the display element.

As discussed above, the selection of the target group may be based on a minimum discount rate provided by the users or individuals, thereby proving the probability of individuals acting on the sales information and buying the product.

The transmission of the sales information as described above may be performed using a communication network such as GSM network, CDMA networks, SDH or SONET network or any other communication networks.

Furthermore, each of the records further includes maximum travel distance to a store, the method further comprises the step of calculating distance between the specific store and each of the individuals in the group and further selecting the selected group of individuals provided the distance between the specific store and the individual is lower than the maximum travel distance.

The combination of the discount information and the travel distance greatly improves the probability of a user or person acting on the sales information distributed from a store owner to the target group.

The target group may further be defined or refined further including demographic information, the method further comprising selecting the selected group of individuals based on the demographic information.

In a presently preferred embodiment of the present invention, the sales information is distributed via SMS and/or MMS and/or email or a combination thereof.

SMS is in the present context meant to cover any transmission of sales information as text or at least the display of the sales information is in text form. The MMS are a combination of text and image or movies. The e-mails may be a combination of text, images, movies and other information, such as hyper links or the like.

Advantageously, the communication device is a mobile phone or a PDA or a computer or a combination thereof. Each of the users may have one or more communication devices registered within the same profile in the first database. The user may receive sales information on one or more of these devices.

As described above, the sales information includes text and/or an image and/or sound.

In one embodiment of the present invention, the location information represents the location of a specific mobile device and is acquired via the network. The location of the mobile device acquired via the network represents the present location of the device and thereby possibly also the location of the user carrying the device. The store owner sending out the sales information is usually interested in the location or whereabouts of the users receiving the sales information, as persons near a store are more likely to enter the store and buy a product. Additionally, the location information is acquired periodically or non-periodically. Alternatively, the location information is acquired in real-time.

The data records may further comprise secondary location information regarding an alternative location of a specific user. The second location may refer to a user's work or other place of residence at which location the user spends some time. The first or primary location information may be the individuals home address and the secondary location information may be the location of the person's place of work.

Store owners may be interested in sending out sales information to persons working near their store as these persons may be encouraged or likely to visit the store after work or during lunch break.

The record may further comprise time information regarding a specific users stay at the alternative location. The time information regarding the user's stay at the secondary or alternative location may indicate their working hours.

Additionally, a second database comprises records regarding a plurality of stores, each record including location information. The second database may hold data records representing a plurality of stores indicating their location, previous transmissions of sales information, credit rating and other information. A system implementing the method may use the second database when a store owner defines sales information to be sent out to a specific target group. The second database may also comprise a store owner's preferred criteria for target groups so that the store owner does not need to redefine or resubmit criteria defining target groups.

Furthermore, the method according to the first and the second aspect of the present invention may include the sale and delivery of goods.

A third aspect of the present invention relates to a record carrier comprising computer readable information. The record carrier may be a compact disc, DVD, hard disc or any other record carrier.

A fourth aspect of the present invention relates to a system for electronically distributing sales information to a selected group of individuals each having a communication device communicating with a communication network, the system comprising a database comprising a plurality of records each representing a specific individual and including identification information, interest information and location information, a server for distributing the sales information to the specific group of individuals selected from the plurality of individuals based on the interest information and the location information, the marketing information sent to the mobile communication devices via the communication network. The system may include or be implemented using a computer having input devices for a store owner or specify a marketing campaign or sales information to be distributed using the system. The system may be connected to a communication network which in turn is connected to a server carrying out the actual distribution of the sales information. The server may be a gateway to a mobile phone network or the like, or in the alternative, a server distributing e-mails.

The communication devices may be a mobile phone, PDA or a computer as discussed in relation to the first and second aspect of the present invention.

The system according to the first aspect of the present invention may further include location information regarding each specific individual, the specific group of individuals selected based on distance between a specific store and each specific individual.

The database may further comprise location information regarding a specific store or a plurality of stores and the distance between a specific store and a user may be calculated and the selection of the target group may be performed according to the method of the first and/or second aspect of the present invention.

The system may advantageously comprise an interface for inputting criteria for selecting said specific group of individuals, where the interface preferably is a graphical user interface, e.g. implemented as a Web page or an application stored on a computer.

The interface may include at least one mask for selecting the criteria defining the target group to receive sales information. The mask or masks may enable the store owner defining the sales information and target group to easily and without error select the criteria that he or she wants.

The criteria may further be selected using a multitude of check boxes.

Finally, the system according to the fourth aspect of the present invention may include any of the features of the first and/or second and/or third aspect of the present invention.

The present invention is now to be described with reference to the drawings in which:

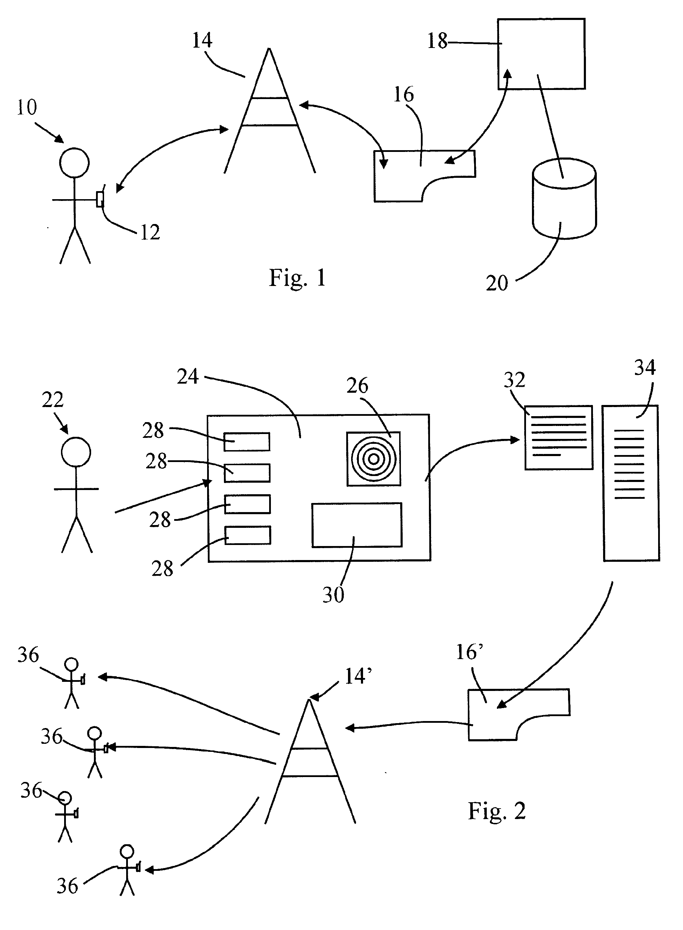

Figs. 1 and 2 are schematic views of a system for performing the method according to the present invention.

In Fig. 1, a user 10 is made aware of the possibility to enrol in a system for selectively receiving promotion information from companies. The user 10 may be made aware of this possibility, through mass media such as radio, television, news papers, printed advertising material, through friends or family or in another way.

In the presently preferred embodiment of the present invention, the user sends an SMS to a specified number for initiating the process of enlisting or enrolling the user 10 to the system. The SMS is sent from a mobile device 12 through a network 14 such as a GSM network, CDMA network or any other network. The SMS is relayed to a gateway 16, where from the SMS is transmitted to a server 18.

The server 18 processes the information in the SMS and returns an SMS with information regarding the enrolment procedure, e.g. which information the user 10 needs to specify to be enlisted or enrolled in the system. The server 18 comprises a database 20 comprising records of a number of individual users, each having specified their interest profile, demographic profile and other information.

The correspondence between the user 10 and the server 18 may require several SMS's depending on the level of details that the system is set up to ask the user 10 or in the alternative, the level of details that the user 10 wishes to enter into the system. The system 10 may create a simple or advanced profile, the simple profile comprising less information than the advance profile.

When the user 10 has submitted his or her information to the server 18, the system is used for selecting a group of individuals from the database 20, who either during the enrolment procedure or in later amendments has specified that they are interested in receiving promotion or sales information via the system regarding specific goods or type of goods.

The information submitted to and stored in the database 20 includes also information regarding which distance the user 20 is willing to travel to a store. Also, the database 20 may comprise information regarding the level of discount a user 10 wishes to obtain, before he or she receives marketing information regarding a specific good or type of goods.

Fig. 2 schematically illustrates a process of a store owner 22 entering or defining an advertising campaign via a graphical user interface 24 to be sent out to a plurality of users. The store owner 22 may be a person acting on behalf of a store owner such as a marketing person, a manager or the like.

The store owner 22 uses the graphical user interface 24 to define the group of persons that the store owner wishes to direct a specific marketing campaign to. The store owner 22 chooses the group based on criteria such as gender, age, interests, geographical location and also specifies which type of goods he or she is promoting. The store owner 22 may also specify that a specific offer only lasts for a specific period of time, e.g. from 10 in the morning till noon.

The graphical user interface 24 also includes a map 26 graphically illustrating the number and location of users presently included in the target group defined by the specifications provided by the store owner 22 regarding demographics etc. In the presently preferred embodiment of the present invention, the map 26 is a static map illustrating the location specified by the users 10 during the enrolment procedure as described above or in later amendments made by the users 10. However, alternative embodiments, where the location of users are obtained through the network 14, may be envisioned, as the location of the users change as they are carrying a mobile device and may move around.

The location of course only represents the location of the mobile device 12 and not necessarily the user 10 as he or she may have left his or her mobile device or for a short period of time having handed it over to someone else. The location of the mobile device 12 is available through the network and provided the mobile device 12 is a mobile phone, a mobile phone company keeps a record of at least an approximate location of the mobile phone.

The location may be obtained by measuring the signal strength between the mobile phone and a base station antenna. Alternatively, the position may be defined or calculated by triangulation between several base station antennas. Further alternatively, the mobile phone or mobile device may include positioning information obtained via a positioning device such as a GPS or the like.

The store owner enters a text describing the product and the offer that the users receive. In the presently preferred embodiment of the present invention, the store owner 22 enters only a text message describing the product and offer, but alternative embodiments may include an image of the product sent to each of the users, such as by sending an MMS or e-mail. In the database 20, the users 10 may have specified which type of messages they wish to receive, e.g. SMS only, SMS and/or MMS, possibly combined with e-mail or only one type of the above-mentioned.

When the store owner 22 has completed the definition of the marketing campaign or sales promotion, the store owner is made aware of the total number of people who receives his or her promotion campaign and also the price for sending these SMS's to the target group. The store owner 22 may not be informed which specific individuals actually receives his or her promotion SMS's.

As the offer specified in the SMS sent to the users may have time limit on it, the system is also capable of detecting when or if an SMS has been received by a mobile device 12 within the time limit that the offer is valid.

When the store owner 22 has completed the definition of the target group and input all information regarding the sales information, a text file 32 is generated comprising the text sent to each of the individuals of the target group and a list 34 comprising the contact information of the individuals to receive the text 32.

The text 32 and the list 34 are sent to a gateway 16', which gateway then sends the text 32 to each of the individuals 36 defined in the group of individuals. The text 32 is sent via the network 14 to the mobile devices 12' of the individuals 36.

In the most basic realisation of the present invention, a user 10 enrols in a system by sending an SMS with the message "on-2800" instructing the system to register the user 10 as a member living in an area covered by the postal code 2800. The system assumes that the user 10 resides in that area.

The enrolment procedure may continue with a series of SMS's, each concerning different aspects of the user profile in the system. Also, the system may send one or more SMS's comprising information regarding the service that the user 10 has just enrolled into. The information preferably also comprises an automatically generated user name and password so that a user at a later point in time may amend or change the information that he or she has submitted during the enrolment to the system. If the user at some point in time forgets or deletes his or her user name and/or password, the user may request that a new password and possibly also the old or a new user name, is sent to the user.

In the presently preferred embodiment of the present invention, the ordering of the user name and/or password may only be performed a limited number of times to prevent abuse of the system to cause unnecessary amounts of SMS's to be sent to the user, preferably a limitation of three requests per day is implemented.

The system also comprises a module for conducting competitions, where e.g. store owners 22 offer gifts to users who have agreed to participate in such games. Alternatively, the users agree on enrolment that they are automatically enrolled in any competitions, either generally or within specific areas of interest.

In the presently preferred embodiment of the present invention, the competition module does not allow store owners 22 to inspect which users are registered in the database and as such does not allow cheating and thereby ensuring to the users that the competition is reasonably fair. It may be decided that only individuals residing or sojourning within a specific radius of a given store participates in a specific competition, e.g. people residing or sojourning within five kilometres of a store.

When the system has drawn a winner of the competition, a message is sent to the store owner 22 identifying the user so that the store owner may supply the price to the user who has won the competition. The user receives an SMS with the message that the user has won the competition and to which store or location the user should go to collect his or her price.

The data records comprised within the system representing each of the individuals enrolled in the system may comprise the following information:
Additionally, information regarding the level of discount that the user wishes to obtain before the user receives a message regarding a specific marketing campaign may be included. Preferably, the user specifies a desired level of discount for each interest group.
Additionally, a user may specify the number of SMS messages the user wishes to receive in a given period, e.g. a day, week or longer.

The number of SMS's that a person receives could be used for increasing the probability for the user to win in a competition as described above. Thereby, the user is encouraged to receive more SMS's during a shorter period of time, being an advantage for both the user and the stores.

The system may also be used for purchasing and subsequently delivering goods to users, as the sales information sent or broadcast to a group of individuals may comprise the possibility of buying the product without actually visiting the store. As the database may comprise two addresses for a specific user, the user may have a choice of where the goods that he or she has purchased via the system are to be delivered.

When a store or store owner wishes to conduct a marketing campaign by sending sales information to a target group in order to sell a specific item or items, the system may check or verify that the store owner has prepaid or is given a credit maximum that covers the expenses of having the marketing campaign distributed to the target group. The evaluation of the credit rating of a specific store owner may be based on previously paid bills or non-payment of bills by the store owner for previous conducting of marketing campaigns.

The payment of bills or prepayment may be performed by traditional bank transfers or alternatively be credit card transfers may be conducted using the graphical user interface of the system.

The system also allows the store owner to store a predefined group or a predefined set of criteria for selecting a group of people so that the store owner does not need to submit the same criteria each time a new marketing campaign needs to be conducted. The store owner may store a number of predefined groups or criteria.

The store owner may optionally choose to include an image of the item being sold, to be distributed by MMS instead of SMS's to the selected group of individuals. Alternatively, the marketing campaign may, as previously described, be distributed via e-mail and the image and/or text may be included in this e-mail.

For protecting the customers or individuals ordering goods via the system, the storeowner may be required to produced evidence that actual physical goods exist before the offer is sent to the target group. Additionally, the number of goods available for sale may also be requested from the store, since, provided a user requests a certain good or number of goods, the user may experience that the goods are sold out or the goods are outstanding and this information needs to be relayed back to the user. Provided the user wishes to order an item or items and the items are sold out or outstanding, the user may accept a long delivery time. The payment of the goods may be held back and not paid out to the store before confirmation of delivery has been received, either through a shipping company or the like.

In one embodiment, the storeowner has the option of ordering and having sent a special message to a selected group of users where the storeowner sells one or more products directly to the users. The users then have the option of buying and paying via the communication device, i.e. the mobile phone, PDA or the like, possibly via a credit card system or issuer.

The user must be approved beforehand to perform such transactions by the system, e.g. via an application and credit rating of the user.

The store owner must supply proof that the products that he or she wishes to sell actually exist, e.g. by supplying information regarding the deposit of the goods or products at a shipping company, such as FedEx or the like.

The order is sent from the user via the system to the storeowner, the distributor and possibly to a credit card company. Hereafter the goods or product is delivered to the user.

The store owner may be required to pay a subscription fee along with the fee for each of the SMS's sent by the system, alternatively the store owner may only be required to pay for the actual transmission of the SMS's.

In the presently preferred embodiment of the present invention, the SMS sent out comprises the individual member identification followed by the actual advertising text from the store and the stores address or information relating to the address. Additionally, the SMS may comprise an add from a sponsor allowing a third party to attach promotion information or marketing information to a number of SMS's to possibly an unspecified group of people.

As the present embodiment of SMS only allows 160 characters, the promotion or marketing information may be required to be sent out using several SMS's. The store owner may adapt his or her information to fit into only one SMS, e.g. by leaving out or modifying the address information. The system may choose not to append a sponsor add, alternatively the store owner may choose not to allow sponsor adds in the SMS's.

Furthermore, the store owner may specify a point in time at which the SMS's are sent out, e.g. specify date, hour, minute etc. at which time the SMS or SMS's are sent out to the group of people specified by the criteria input by the store owner. Alternatively, the SMS's may be sent out immediately after the store owner has approved the final layout of the text and the definition of the group of people to receive the SMS.

The process of the store owner defining a marketing campaign or sales promotion requires the following steps:
The store owner must supply or provide the physical location of the store offering the goods subject to the marketing campaign. The geographical location of the store may be predefined or previously provided by the store owner and stored in the system for later retrieval and use. The store owner selects at which maximum distance he wishes people to be in when receiving the marketing information. The choice is preferably made via a graphical user interface indicating one or more radiuses, such as a radius of 500 metres, 2 km, 4, km, 8 km, 16 km, 32 km or more.

The number of individuals fulfilling the requirements are continuously updated as the store owner increasingly reduces the group by adding more restrictions or requirements or criteria.

If a user has only supplied an area code or postal code, the user or individual is included in the group provided he or she is at least within the largest radius.

The store owner then specifies gender, either one or both.

The store owner then selects one or more age groups to which he or she intends to send the marketing information. The age groups may be divided into intervals, such as 17-25, 25-35, 35-45, 45- or all. Several age groups may be chosen.

The store owner also supplies the type of goods that he or she wishes to promote and the selection of the group is then based on the above-mentioned criteria.

The graphical user interface that the store owner sees also includes a table illustrating the number of people or individuals in the selected group receiving the SMS's. The table also provides information regarding at which distance or radius they are located, as the price of the SMS's sent may vary according to the distance or radius. People or individuals located further away from the store are less likely to act on the promotion campaign, and therefore, SMS's sent to people far away are less expensive than messages sent to people in close vicinity of the store.

Also, the store owner may provide information regarding the level of discount obtainable by acting on the promotion campaign. The information may be entered as a 'before and now' price or a discount rate in percentage or in a given currency.

As previously described, the location of the individuals may be obtained in real time or maybe fixed locations entered by the individuals.

The sponsor SMS's are defined in mostly the same way as the SMS's sent by the store owners. The sponsor defines a period of time within which the sponsor wishes to have sponsor adds added to SMS's sent out in that period of time. The sponsor defines a start date and time and an end date and time. The sponsor further defines the areas, in which the sponsor wishes the SMS's to be sent out to, e.g. based on postal codes, counties or countries. The criteria as specified by the store owners may also be applied to sponsor SMS's. The sponsor may specify that he or she only wishes to send out SMS's to people interested in certain kinds of goods or within certain age groups. Also, the sponsor may specify a number of sponsor SMS's that he or she wishes to send, as the number of SMS's sent out to a specific target group may be very high and as in the case of the store owner sending SMS's, the sponsor also pays her SMS.

An example of a sponsor SMS is a message reminding people to watch a certain TV show at a certain time on a given channel.

The sponsor may purchase a certain amount of transmissions of the SMS's or have a subscription where the actual SMS's are simply built periodically or a periodically. The sponsor may receive information regarding the actual number of sponsor SMS's sent e.g. via a web interface or e-mail or other notification systems.

## Claims

1. A method for electronically distributing sales information to a selected group of individuals, each of said individuals having a communication device including a display element, said communication device connected to a communication network, said selected group of individuals selected from a first database comprising a plurality of records each representing a specific individual and including identification information, interest information, location information and maximum travel distance, said method comprising the steps of:
providing geographical location information of a specific store and calculating distance between said specific store and each of said individuals in said group,
selecting said selected group of individuals from said group provided said distance between said specific store and said individual is lower than said desired maximum distance and based on said interest information, and
transmitting said sales information via said communication network to said communication devices of said individuals in said selected group to be displayed by said display element.

2. The method according to claim 1, wherein each of said records further includes a minimum discount, said method further comprising:
providing information regarding discount obtained in said sales information,
further selecting said selected group of individuals based on comparing said discount information with said minimum discount.

3. A method for electronically distributing sales information to a selected group of individuals, each of said individuals having a communication device including a display element, said communication device connected to a communication network, said selected group of individuals selected from a first database comprising a plurality of records each representing a specific individual and including identification information, interest information, location information and minimum discount, said method comprising the steps of:
providing discount information,
selecting said selected group of individuals based on comparing said discount information with said desired minimum discount and based on said interest information, and
transmitting said sales information via said communication network to said communication devices of said individuals in said selected group to be displayed by said display element.

4. The method according to claim 3, wherein each of said records further includes maximum travel distance to a store, said method further comprises the step of:
calculating distance between said specific store and each of said individuals in said group and further selecting said selected group of individuals provided said distance between said specific store and said individual is lower than said maximum travel distance.

5. The method according to any of the claims 1-4, wherein each of said records further includes demographic information, said method further comprising selecting said selected group of individuals based on said demographic information.

6. The method according to any of the claims 1-5, wherein said sales information is distributed via SMS and/or MMS and/or email.

7. The method according to any of the claims 1-6, wherein said communication device is a mobile phone or a PDA or a computer or a combination thereof.

8. The method according to any of the claims 1-7, wherein said sales information includes text and/or an image and/or sound.

9. The method according to any of the claims 1-8, wherein said location information represents the location of a specific mobile device and is acquired via said network.

10. The method according to any of the claims 1-9, wherein said location information is acquired periodically or non-periodically.

11. The method according to any of the claims 1-9, wherein said location information is acquired in real-time.

12. The method according to any of the claims 1-11, wherein at least one of said records further comprises secondary location information regarding an alternative location of a specific user.

13. The method according to claim 12, wherein said at least one record further comprises time information regarding a specific users stay at said alternative location.

14. The method according to any of the claims 1-13, further including a second database comprising records regarding a plurality of stores, each record including location information.

15. A record carrier comprising computer readable information implementing the method according to any of the claims 1-14.

16. A system for electronically distributing sales information to a selected group of individuals each having a communication device communicating with a communication network, said system comprising:
a database comprising a plurality of records each representing a specific individual and including identification information, interest information and location information,
a server for distributing said sales information to said specific group of individuals selected from said plurality of individuals based on said interest information and said location information, said marketing information sent to said mobile communication devices via said communication network.

17. The system according to claim 16, wherein said database further comprises location information regarding each specific individual, said specific group of individuals selected based on distance between a specific store and each specific individual.

18. The system according to claim 16 or 17, further comprising an interface for inputting criteria for selecting said specific group of individuals.

19. The system according to claim 18, wherein said interface includes at least one mask.

20. The system according to claim 18 or 19, wherein said interface includes a multitude of check boxes.

21. The system according to any of the claims 16-20, wherein said system is adapted to carry-out the method according to any of the claims 1-14.
